(19) Europäisches Patentamt / European Patent Office / Office européen des brevets

(11) **EP 3 460 759 A1**

(12) **EUROPEAN PATENT APPLICATION**

(43) Date of publication:
**27.03.2019 Bulletin 2019/13**

(51) Int Cl.:
*G06T 15/20* (2011.01)     *H04N 21/43* (2011.01)
*H04N 21/218* (2011.01)    *H04N 21/2343* (2011.01)
*H04N 21/262* (2011.01)    *H04N 21/4728* (2011.01)
*H04N 21/845* (2011.01)

(21) Application number: **17306264.7**

(22) Date of filing: **26.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• LE ROUX, Jean
  35576 Cesson-Sévigné (FR)
• LEGALLAIS, Yvon
  35576 Cesson-Sévigné (FR)
• SALMON-LEGAGNEUR, Charles
  35576 Cesson-Sévigné (FR)

(74) Representative: **Huchet, Anne et al
InterDigital CE Patent Holdings
20, rue Rouget de Lisle
92130 Issy-les-Moulineaux (FR)**

(54) **METHOD AND NETWORK EQUIPMENT FOR TILING A SPHERE REPRESENTING A SPHERICAL MULTIMEDIA CONTENT**

(57) A method for tiling with a set of tiles a sphere representing a spherical multimedia content, comprises:
- obtaining (402) an altitude for each parallel line of the sphere comprising one or several centroids of the tiles, each tile being defined as a portion of the sphere covering a tile horizontal angular amplitude and a tile vertical angular amplitude;
- obtaining (403) an angular position for each centroid of the tiles arranged on the parallel lines;
- determining (404) transformations to be applied to a reference tile to obtain the tiles of the set of tiles, each of the transformations depending on the obtained altitude and angular position of the centroid of a corresponding tile to be obtained.

FIG.4

400

| Define tiles on a sphere | 401 |
| Obtain an altitude $\theta_j$ for each parallel line $L_j$ of the sphere | 402 |
| Determine an horizontal angular position $\Phi_{ij}$ of the centroids $C_{ij}$ of the tiles | 403 |
| Determine rotation matrices to be applied to a reference tile to obtain the tiles of the set of tiles | 404 |
| Apply the rotation matrices to a reference tile | 405 |
| Determine the pixel content of each tile | 406 |

EP 3 460 759 A1

**Description**

TECHNICAL FIELD

The present disclosure relates generally to the streaming of spherical videos (so called Virtual Reality (VR) 360° videos) to an end device through a delivery network.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

VR 360° videos offer an immersive experience wherein a user can look around using a VR head-mounted display (HMD) or can navigate freely within a scene on a flat display by controlling the viewport with a controlling apparatus (such as a mouse or a remote control).

Such a freedom in spatial navigation requires that the whole 360° scene is delivered to a player (embedded within the HMD or TV set) configured to extract the video portion to be visualized depending on the position of the viewport within the scene. Therefore, a high throughput is necessary to deliver the video. Indeed, it is commonly admitted that a physical space field of vision surrounded by the 360° horizontal direction and 180° vertical direction ca n be entirely covered by a user within a minimum set of twelve viewports. To offer an unrestricted VR 360° video service in 4K resolution, a video stream equivalent to twelve 4K videos has to be provided.

Therefore, one main issue relies on the efficient transmission of VR 360° videos over bandwidth constrained network with an acceptable quality of immersive experience (i.e. avoiding freeze screen, blockiness, black screen, etc.). Currently, for delivering a VR 360° video service in streaming, a compromise has to be reached between immersive experience, resolution of video and available throughput of the content delivery network.

The majority of known solutions streaming VR 360° v ideos provides the full 360° scene to the end device, but only less than 10% of the whole scene is presented to the user. Since delivery networks have limited throughput, the video resolution is decreased to meet bandwidth constraints.

Other known solutions mitigate the degradation of the video quality by reducing the resolution of the portion of the 360° scene arranged outside of the current viewport of the end device. Nevertheless, when the viewport of the end device is moved upon user's action to a lower resolution area, the displayed video suffers from a sudden degradation.

The present disclosure has been devised with the foregoing in mind.

SUMMARY

The disclosure concerns a method for tiling with a set of tiles a sphere representing a spherical multimedia content,
said method comprising:

- obtaining an altitude for each parallel line of the sphere comprising one or several centroids of the tiles, each tile being defined as a portion of said sphere covering a tile horizontal angular amplitude and a tile vertical angular amplitude;
- obtaining an angular position for each centroid of the tiles arranged on the parallel lines;
- determining transformations to be applied to a reference tile to obtain the tiles of the set of tiles, each of said transformations depending on the obtained altitude and angular position of the centroid of a corresponding tile to be obtained.

In an embodiment, each transformation associated with a corresponding tile of the set of tiles can be defined by a rotation matrix.

In an embodiment, said rotation matrix can be a matrix product of two rotation matrices defined by the following equation:

$$Rot_{ij} = Rot(y, \varphi_{ij}) * Rot(x, \theta_j)$$

wherein:

- Rot$_{ij}$ is the matrix product,
- Rot(x, θ$_j$) is a rotation matrix associated with a rotation of an angle around an axis x of an orthogonal system of axes x,y,z arranged at a center of the sphere,
- Rot(y, φ$_{ij}$) is a rotation matrix associated with a rotation of an angle around the axis y of the orthogonal system.

In an embodiment, for said corresponding tile,

- the rotation angle around the axis x can correspond to the obtained altitude of a parallel line comprising the centroid of the corresponding tile,
- the rotation angle around the axis y can correspond to the obtained angular position of the centroid of said corresponding tile.

In an embodiment, the tile horizontal angular amplitude and the tile vertical angular amplitude can depend on service parameters.

In an embodiment, the number of parallel lines can depend on the tile vertical angular amplitude and a vertical overlapping ratio.

In an embodiment, the number of tiles on a parallel line can depend on the tile horizontal angular amplitude and a horizontal overlapping ratio.

In an embodiment, the angular amplitude between two parallel lines can be constant.

In an embodiment, the tiles of said set of tiles can have the same shape.

The present disclosure also concerns a network equipment configured for tiling with a set of tiles a sphere representing a spherical multimedia content, said network equipment comprising at least one memory and at least one processing circuitry configured to perform:

- obtaining an altitude for each parallel line of the sphere comprising one or several centroids of the tiles, each tile being defined as a portion of said sphere covering a tile horizontal angular amplitude and a tile vertical angular amplitude;
- obtaining an angular position for each centroid of the tiles arranged on the parallel lines;
- determining transformations to be applied to a reference tile to obtain the tiles of the set of tiles, each of said transformations depending on the obtained altitude and angular position of the centroid of a corresponding tile to be obtained.

In an embodiment, each transformation associated with a corresponding tile of the set of tiles can be defined by a rotation matrix.

In an embodiment, said rotation matrix can be a matrix product of two rotation matrices defined by the following equation:

$$Rot_{ij} = Rot(y, \varphi_{ij}) * Rot(x, \theta_j)$$

wherein:

- Rot$_{ij}$ is the matrix product,
- Rot(x, θ$_j$) is a rotation matrix associated with a rotation of an angle around an axis x of an orthogonal system of axes x,y,z arranged at a center of the sphere,
- Rot(y, φ$_{ij}$) is a rotation matrix associated with a rotation of an angle around the axis y of the orthogonal system.

In an embodiment, for said corresponding tile,

- the rotation angle around the axis x can correspond to the obtained altitude of a parallel line comprising the centroid of the corresponding tile,
- the rotation angle around the axis y can correspond to the obtained angular position of the centroid of said corresponding tile.

In an embodiment, the tile horizontal angular amplitude and the tile vertical angular amplitude can depend on service parameters.

In an embodiment, the number of parallel lines can depend on the tile vertical angular amplitude and a vertical overlapping ratio.

The present disclosure also concerns a method to be implemented at a terminal configured to be in communication with a network equipment to receive a spherical multimedia content represented by a sphere, wherein the method comprises receiving:

- altitudes for each parallel line of the sphere comprising one or several centroids of tiles tiling said sphere, each tile being defined as a portion of said sphere covering a tile horizontal angular amplitude and a tile vertical angular amplitude;
- angular positions for each centroid of the tiles arranged on the parallel lines;
- transformations to be applied to a reference tile to obtain the tiles tiling said sphere, each of said transformations depending on the obtained altitude and angular position of the centroid of a corresponding tile to be obtained.

The present disclosure further concerns a terminal configured to be in communication with a network equipment to receive a spherical multimedia content represented by a sphere, wherein said terminal comprises at least one memory and at least one processing circuitry configured to receive:

- altitudes for each parallel line of the sphere comprising one or several centroids of tiles tiling said sphere, each tile being defined as a portion of said sphere covering a tile horizontal angular amplitude and a tile vertical angular amplitude;
- angular positions for each centroid of the tiles arranged on the parallel lines;
- transformations to be applied to a reference tile to obtain the tiles tiling said sphere, each of said transformations depending on the obtained altitude and angular position of the centroid of a corresponding tile to be obtained.

Besides, the present disclosure is further directed to a non-transitory program storage device, readable by a computer, tangibly embodying a program of instructions executable by the computer to perform a method for tiling with a set of tiles a sphere representing a spherical multimedia content, which comprises:

- obtaining an altitude for each parallel line of the sphere comprising one or several centroids of the tiles, each tile being defined as a portion of said sphere covering a tile horizontal angular amplitude and a tile vertical angular amplitude;
- obtaining an angular position for each centroid of the tiles arranged on the parallel lines;
- determining transformations to be applied to a reference tile to obtain the tiles of the set of tiles, each of said transformations depending on the obtained altitude and angular position of the centroid of a corresponding tile to be obtained.

The present disclosure also concerns a computer program product which is stored on a non-transitory computer readable medium and comprises program code instructions executable by a processor for implementing a method for tiling with a set of tiles a sphere representing a spherical multimedia content, which comprises:

- obtaining an altitude for each parallel line of the sphere comprising one or several centroids of the tiles, each tile being defined as a portion of said sphere covering a tile horizontal angular amplitude and a tile vertical angular amplitude;
- obtaining an angular position for each centroid of the tiles arranged on the parallel lines;
- determining transformations to be applied to a reference tile to obtain the tiles of the set of tiles, each of said transformations depending on the obtained altitude and angular position of the centroid of a corresponding tile to be obtained.

The method according to the disclosure may be implemented in software on a programmable apparatus. It may be implemented solely in hardware or in software, or in a combination thereof.

Some processes implemented by elements of the present disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like.

The disclosure thus provides a computer-readable program comprising computer-executable instructions to enable a computer to perform the method for tiling with a set of tiles a sphere representing a spherical multimedia content according to the disclosure.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

BRIEF DESCRIPTION OF THE DRAWINGS

The disclosure will be better understood and illustrated by means of the following embodiment and execution examples, in no way limitative, with reference to the appended figures on which:

- Figure 1 is a schematic diagram of an exemplary network architecture wherein the present principles might be implemented;
- Figure 2 is a schematic block diagram of an exemplary client terminal wherein the present principles might be implemented;
- Figure 3 is a schematic block diagram of an exemplary network equipment wherein the present principles might be implemented;
- Figure 4 is flow chart of an exemplary method used by some embodiments of the present principles for tiling a spherical multimedia content;
- Figure 5 depicts a projection of a spherical multimedia content on a sphere according to the present principles;
- Figure 6 shows an exemplary tile obtained by the method shown in Figure 4;
- Figure 7 illustrates a spatial orthogonal system used to implement the method of Figure 4;
- Figure 8 shows an example of parallel lines of the sphere of Figure 5, according to the present principles;
- Figure 9 shows an exemplary projection on a plan of a tile obtained by the method of Figure 4;
- Figure 10 depicts an exemplary distribution of parallel lines obtained according to an implementation of the method of Figure 4.

Wherever possible, the same reference numerals will be used throughout the figures to refer to the same or like parts.

DETAILED DESCRIPTION

The following description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

In the claims hereof, any element expressed as a means and/or module for performing a specified function is intended to encompass any way of performing that function including, for example, a) a combination of circuit elements that performs that function or b) software in any form, including, therefore, firmware, microcode or the like, combined with appropriate circuitry for executing that software to perform the function. It is thus regarded that any means that can provide those functionalities are equivalent to those shown herein.

In addition, it is to be understood that the figures and descriptions of the present disclosure have been simplified to illustrate elements that are relevant for a clear understanding of the present disclosure, while eliminating, for purposes of clarity, many other elements found in typical digital multimedia content delivery methods, devices and systems. However, because such elements are well known in the art, a detailed discussion of such elements is not provided herein. The disclosure herein is directed to all such variations and modifications known to those skilled in the art.

The present disclosure is depicted with regard to a streaming environment to deliver a spherical multimedia content (such as a VR 360°video) to a client terminal through a delivery network.

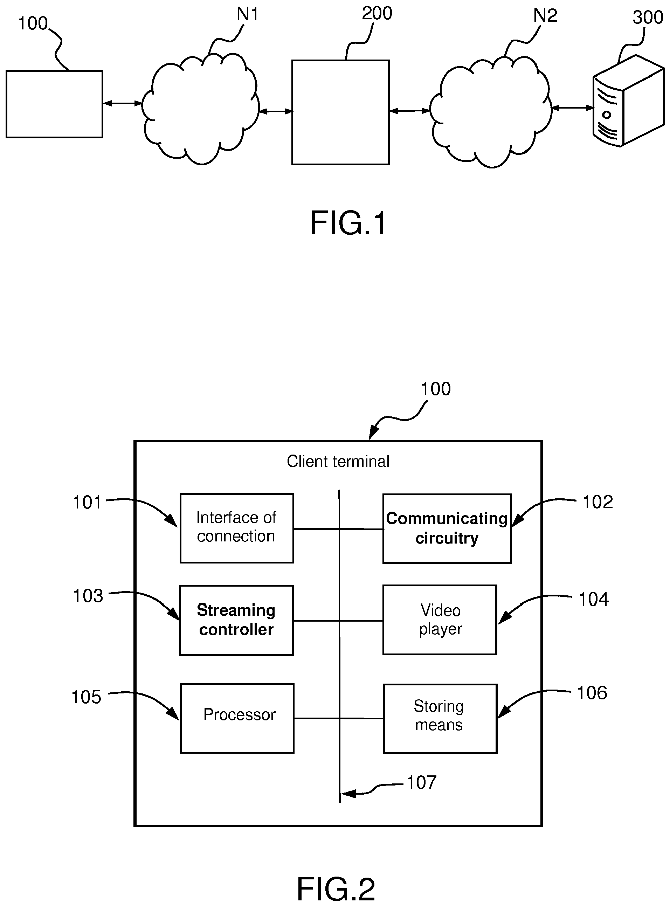

As shown in Figure 1, the network architecture, wherein the present disclosure might be implemented, comprises a client terminal 100, a gateway 200 and a network equipment 300.

The client terminal 100 - connected to the gateway 200 through a first network N1 (such as a home network or an enterprise network) - may wish to request a VR 360° video stored on a remote network equipment 300 through a second network N2 (such as the Internet network). The first network N1 is connected to the second network N2 thanks to the gateway 200.

The network equipment 300 is configured to stream segments to the client terminal 100, upon the client request, using a streaming protocol (such as the HTTP adaptive streaming protocol, so called HAS).

As shown in the example of Figure 2, the client terminal 100 can comprise at least:

- an interface of connection 101 (wired and/or wireless, as for example Wi-Fi, Ethernet, etc.) to the first network N1;
- a communication circuitry 102 containing the protocol stacks to communicate with the network equipment 300. In particular, the communication module 102 comprises the TCP/IP stack well known in the art. Of course, it could be any other type of network and/or communicating means enabling the client terminal 100 to communicate with the network equipment 300;
- a streaming controller 103 which receives the VR 360° video from the network equipment 300;
- a video player 104 adapted to decode and render the multimedia content;
- one or more processor(s) 105 for executing the applications and programs stored in a non-volatile memory of the client terminal 100;
- storing means 106, such as a volatile memory, for buffering the segments received from the network equipment 300 before their transmission to the video player 104;
- an internal bus 107 to connect the various modules and all means well known to the skilled in the art for performing the generic client terminal functionalities.

As an example, the client terminal 100 is a portable media device, a mobile phone, a tablet or a laptop, a head mounted device, a set-top box or the like. Naturally, the client terminal 100 might not comprise a complete video player, but only some sub-elements such as the ones for demultiplexing and decoding the media content and might rely upon an external means to display the decoded content to the end user.

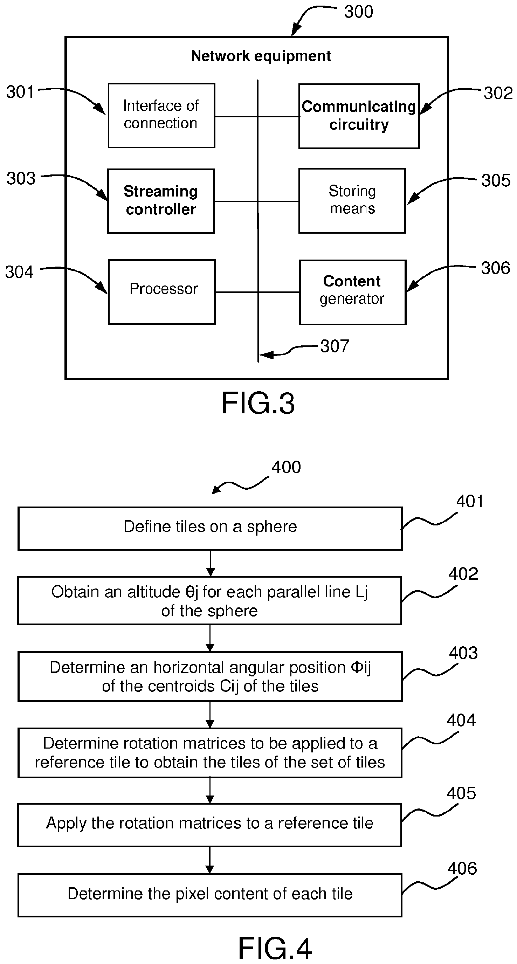

As shown in the example of Figure 3, the network equipment 300 can comprise at least:

- an interface of connection 301 to the second network N2;
- a communication circuitry 302 to deliver data to one or several requesting terminals. In particular, the communication circuitry 302 can comprise the TCP/IP stack well known in the art. Of course, it could be any other type of network and/or communicating means enabling the network equipment 300 to communicate with a client terminal 100;
- a streaming controller 303 configured to deliver the VR 360° video to one or several client terminals;
- one or more processor(s) 304 for executing the applications and programs stored in a non-volatile memory of the network equipment 300;
- storing means 305;
- a content generator 306 configured to generate the VR 360° video to be transmitted. It should be understood that the content generator may be arranged in a separate apparatus distinct from the network equipment 300. In such case, the apparatus comprising the content generator can send the VR content to the network equipment;
- an internal bus 307 to connect the various modules and all means well known to the skilled in the art for performing the generic network equipment functionalities.

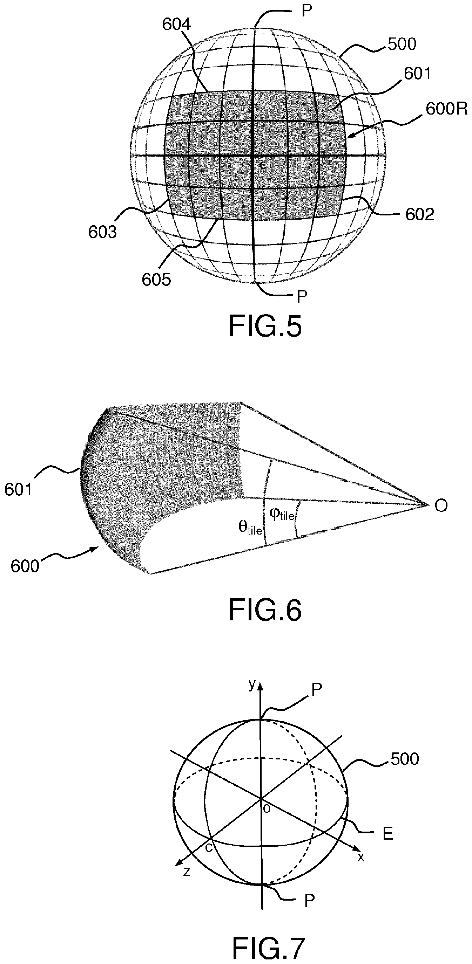

According to the present principles, the network equipment 300 (e.g. via its processor(s) 304 and/or content generator 306) is configured to implement a method 400 (shown in Figure 4) for tiling a spherical multimedia content (e.g. a VR 360° video) with a set of tiles in an orthogonal system of axes x,y,z R(O,x,y,z) (as shown in Figure 7) arranged at a center O of a sphere 500 representing the VR 360° video. The center O of the sphere corresponds to the position of the acquisition device which has acquired the VR 360° video.

As shown in the example of Figures 5 and 6, each tile 600 of the set of tiles can be defined, in a step 401, as a portion 601 of said sphere 500 covering a tile horizontal angular amplitude $\varphi_{tile}$ and a tile vertical angular amplitude $\theta_{tile}$.

The tile horizontal angular amplitude $\varphi_{tile}$ and the tile vertical angular amplitude $\theta_{tile}$ can be determined by taking into account one or several of the following service parameters of the targeted VR 360° video service:

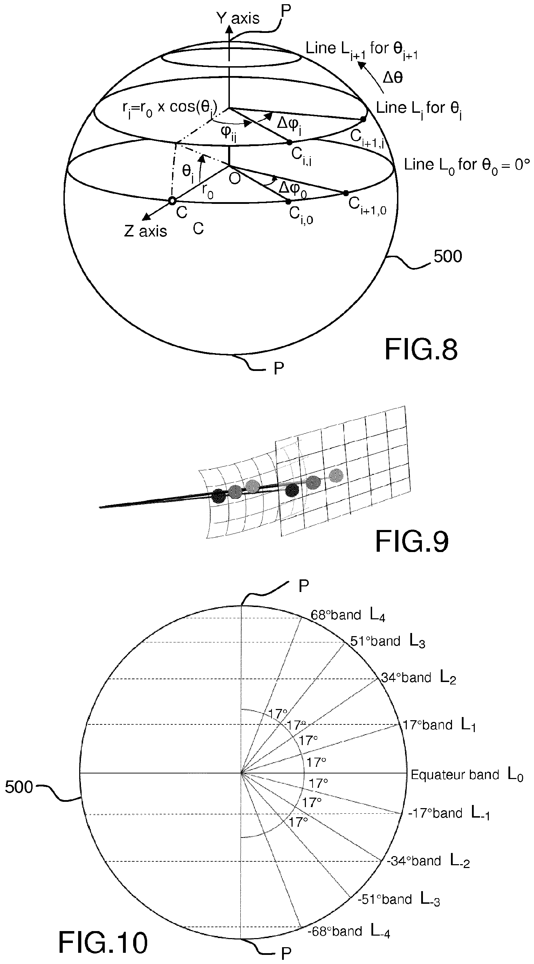

- a network available bandwidth for delivery along a transmission path between the client terminal 100 and the network equipment 300;
- a quality of the requested VR 360° video;
- a user field of view associated with the viewport of the client terminal 100;
- a horizontal over provisioning ratio $R_{hor}$, which can be the ratio between 0 and 1 of the intersection surface between two consecutive tiles on a same line $L_j$, over the surface of a tile 600, (as described in relation to Figure 8);
- a vertical over provisioning ratio $R_{ver}$, which can be the ratio between 0 and 1 of the intersection surface between two tiles on two consecutives line $L_j$ and $L_{j+1}$, over the surface of a tile 600 (see Figure 8).

The reference tile 600R depicted in Figure 6 has a center C corresponding to the intersection of the Oz axis (positive part) of the orthogonal system R(O,x,y,z) with the surface of the sphere 500 representing the VR 360° video. In the system R(O,x,y,z), the coordinates of the point C is (0,0,1), i.e. $x_c=0$, $y_c=0$ and $z_c=1$. Its spherical coordinates are (1,0,0), i.e. $\rho_c=1$, $\theta_c=0$ and $\varphi_c=0$. The reference tile 600R can then be defined by the area comprised between:

- the meridian 602 indicating $\varphi = + \varphi_{tile}/2$;
- the meridian 603 indicating $\varphi = - (\varphi_{tile}/2$;
- the parallel 604 indicating $\theta = + \theta_{tile}/2$;
- the parallel 605 indicating $\theta = - \theta_{tile}/2$.

The central point (so called centroid) $C_{ij}$ of a tile 600 of the set of tiles can be defined with the spherical coordinates $(1, \theta_j, \varphi_{ij})$ in the system R(O,x,y,z).

To determine the centroids of the tiles 600, the network equipment 300 can, in a step 402, obtain an altitude $\theta_j$ for each parallel line $L_j$ of the sphere 500 which comprises one or several centroids $C_{ij}$ of tiles 600 of the set of tiles. The number of parallel lines $L_j$ depends on the tile vertical angular amplitude $\theta_{tile}$ and the vertical overlapping ratio $R_{vert}$. The angle between two consecutive parallel lines $L_j$ can be defined by the following equation:

$$\Delta\theta = \theta_{tile} \times (1 - R_{vert})$$

It can be derived a list of possible $\theta_j$ values for the centroids $C_{ij}$ of the tiles 600, given by:

$$\theta_j = \Delta\theta \times j = \theta_{tile} \times (1 - R_{vert}) \times j$$

wherein j belongs to [0, ..., $N_{parallels\ per\ hemisphere}-1$] with the maximum number of parallel lines $L_j$ per hemisphere given by $N_{parallels\ per\ hemisphere} = 90°/ \theta\Delta$.

It is worth noting that the maximum number of parallel lines $L_j$ per hemisphere can be lowered. The most the viewport is close to the poles, the most the navigation becomes a simple rotation around a single point. Consequently, a band of tiles can be less efficient at the poles and can be replaced a by star-shaped layout as described hereinafter. In an illustrative but non-limitative example, the pole case can reduce by one the number of parallel lines per hemisphere, so that the number of parallel lines $L_j$ becomes:

$$N_{parallels\ per\ hemisphere} = (90°/ \Delta\theta) - 1.$$

Once the parallel lines $L_j$ are defined, the network equipment 300 can, in a step 403, further determine the horizontal angular position of the centroids $C_{ij}$ on the corresponding parallel lines $L_j$, such as, for instance, they spatially meet the horizontal overlapping ratio $R_{hor}$. The number of tiles 600 arranged on a parallel line $L_j$ decreases when moving through the poles P, as it is proportional to the circumference of the parallel line $L_j$. By considering a circumference $C_E$ at the equator E, the circumference $C_j$ for a parallel line $L_j$ at an altitude $\theta_j$ is given by the following formulae:

$$C_j = C_E \times \cos \theta_j$$

The number of tiles 600 per parallel line $L_j$ can depend on the tile horizontal angular amplitude $\varphi_{tile}$ and the horizontal overlapping ratio $R_{hor}$. In particular, for the parallel line $L_0$ arranged at $\theta_0 = 0°$, the angular deviation between two consecutive centroids $C_{10}$ belonging to $L_0$ is given by:

$$\Delta\varphi_0 = \varphi_{tile} \times (1 - R_{hor})$$

so that the number of tiles on the parallel line $L_0$ can be derived as follows:

$$N_{tiles\ on\ parallel\ L0} = 360° / \Delta\varphi_0$$

This leads to a list of possible $\varphi_{i0}$ values for the tile centroids $C_{i0}$ on the parallel line $L_0$, given by:

$$\varphi_{i0} = \Delta\varphi_0 \times i$$

with i belonging to $[0, \dots, N_{tiles\ on\ parallel\ L0} - 1]$.

The number of tiles on a parallel line $L_j$ can then be obtained from the following formulae:

$$N_{tiles\ on\ parallel\ Lj} = N_{tiles\ on\ parallel\ L0} \times \cos(\theta_j) = 360° \times \cos(\theta_j) / \Delta\varphi_0$$

In addition, the angular deviation between two consecutive centroids arranged on a parallel line $L_j$ is derived from the following equation:

$$\Delta\varphi_j = 360° / N_{tiles\ on\ parallel\ Lj} = \Delta\varphi_0 / \cos(\theta_j)$$

For a centroid $C_{ij}$ arranged on a parallel line $L_j$, the angular position of the centroid $C_{ij}$ in the system $R(O,x,y,z)$ can be obtained as follows:

$$\varphi_{ij} = \Delta\varphi_j \times i = \Delta\varphi_0 \times i / \cos(\theta j)$$

with i belonging to $[0, \dots, N_{tiles\ on\ parallel\ Lj} - 1]$.

$\varphi_{ij}$ represents a rotation angle around axis y with respect to the segment OC and $\theta_j$ a rotation angle around axis x with respect to OC. The segment $OC_{ij}$ can be obtained by a rotation matrix applied to OC defined (step 404) as follows:

$$OC_{ij} = Rot_{ij}(OC)$$

with $Rot_{ij}$ the rotation matrix.

In an embodiment of the present principles, the rotation matrix $Rot_{ij}$ can be a matrix product of two rotation matrices defined by the following equation:

$$Rot_{ij} = Rot(y, \varphi_{ij}) \times Rot(x, \theta_j)$$

wherein:

- Rot(x, $\theta_j$) is rotation matrix associated with a rotation of the angle $\theta_j$ around the x axis of the orthogonal system $R(O,x,y,z)$, and
- Rot(y, $\varphi_{ij}$) is rotation matrix associated with a rotation of the angle ($\varphi_{ij}$ around the y axis of the orthogonal system R(O,x,y,z).

In an embodiment of the present principles, since every tile of the set of tiles has the same shape, to obtain the tile mesh associated with the tile of centroid $C_{ij}$ (the mesh center of a tile is arranged at the center of said tile), the rotation matrix $Rot_{ij}$ can be applied, in a step 405, to a reference tile mesh associated with the reference tile 600R of centroid C. The reference tile 600R can serve as a model for all the tiles. The rotation matrix $Rot_{ij}$ is then applied to all vertices of the reference mesh to obtain the vertices of the tile mesh associated with the tile centered on $C_{ij}$.

In a step 406, the network equipment 300 can determine the pixel content of the tile, e.g. by using a known ray-tracing technique computing ray intersection between the rotated tile shape and a 360° video fra me of the VR 360° video projected on the sphere 500.

It should be noted that few tiles can be distributed in a star-shaped way at each pole P to complete the tiling of the sphere 500. For instance, in an illustrative but non-limitative example, the distribution in a star-shaped way can comprise six tiles (covering a tile horizontal angular amplitude $\varphi_{tile}$ and a tile vertical angular amplitude $\theta_{tile}$) on each pole P, regularly arranged (e.g. the angular deviation between the centers $C_{ij}$ of two consecutives tiles is equal to 60°). The axial tilt between the normal axis of a tile at center $C_{ij}$ and the y axis of the orthogonal system R(O,x,y,z) can be equal to 5°.

As shown in Figure 9, when the content delivered to the player 104 of a client terminal 100 is an MPEG video, i.e. a 2D array of pixels, every generated tile (i.e. portion of the sphere 500) can be translated into such a 2D array by a projection of spherical portion to a plan.

Besides, according to the present principles, the streaming controller 103 of the client terminal 100 - receiving the VR 360° vid eo from the network equipment 300 - can be further configured to continually select the segments associated with the tiles covering, for instance, the current viewport associated with the terminal 100. In the example of adaptive streaming, the switch from a current tile to a next tile - both comprising the current viewport - may occur only at the end of a video segment and at the beginning of the next one.

To this end, the client terminal 100 can receive, from the network equipment 300, the values of the tile horizontal and vertical angular amplitudes ($\varphi_{tile}$, $\theta_{tile}$), in order to be able to regenerate the tile reference mesh. The network equipment 300 can also send all the vertices of the reference tile 600R to terminal 100 and the list of rotation matrices $Rot_{ij}$ to be applied to the tile reference mesh to obtain the tiles covering the sphere 500. In a variant, the network equipment can only share with the terminal 100 the polar coordinates of the centroid $C_{ij}$, when the terminal 100 is configured to dynamically re-compute the rotation matrices by using appropriate mathematic libraries.

In an illustrative but non-limitative example of the present principles shown in Figure 10, wherein the support for the scene representation of a VR 360° video is a sphere, a horizontal FOV (Field of View) equal to 60° for a viewport (associated with the client terminal 100) is considered leading to a horizontal FOV for the 4K tiles equal to about 120°. To allow an optimal projection in a 4K video, the shape of the tiles is chosen close to a 16/9 rectangle. In addition, to obtain the same behavior for any viewport position, the shape of the tiles is independent of the user's point of view. Thus, when the user is watching at the equator $L_0$ (i.e. in front of him) or at a pole P (i.e. over his head or watching his feet), the video delivered to the player 104 represents the same proportion of the VR 360° scene.

In the example, the 4K video tiles are delivered to the terminal 100 with a horizontal FOV equal to 120° and a vertical FOV equ al to about 72° (to respect the 16:9 ratio of the VR 360° video). By considering a horizontal overlapping ratio $R_{hor}$ equal to ¾ along the equator E between two consecutive tiles (leading to a horizontal angular overlap of 90°), the shift betwe en two consecutive tiles is equal to 30°, so that twelve tiles are defined on the equator E (parallel line $L_0$). The same operation can be applied vertically when moving from south to north pole P. The angular vertical overlap is equal to 51° when consi dering a vertical overlapping ratio $R_{vert}$ equal to ¾, meaning that the vertical shift from a crown of tiles to the upper one is equal to 17°, so that eleven tiles can be arranged on a given meridian of the sphere. Besides, few tiles are organized in a star-shaped way at each pole P to complete the tiling of the sphere representing the VR 360° video. In the end, about seventy tiles are required to cover the whole sphere.

Thanks to the above described method, by delivering only a portion of the scene, the ratio of video quality over data bitrate can be controlled and a high-quality video on client side can be obtained, even with network bandwidth constraints. In addition, by generating a tile larger than the viewport and adapted to the display ratio, a minimal user navigation in the video without disruption can be provided. Furthermore, by building the same shape of tiles for all viewports, it can prevent from reducing the quality on the poles.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the method and device described. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

Although certain embodiments only of the disclosure have been described herein, it will be understood by any person skilled in the art that other modifications, variations, and possibilities of the disclosure are possible. Such modifications, variations and possibilities are therefore to be considered as falling within the spirit and scope of the disclosure and hence forming part of the disclosure as herein described and/or exemplified.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

## Claims

1. A method for tiling with a set of tiles (600) a sphere (500) representing a spherical multimedia content, said method (400) comprising:

   - obtaining (402) an altitude ($\theta_j$) for each parallel line ($L_j$) of the sphere (500) comprising one or several centroids ($C_{ij}$) of the tiles (600), each tile being defined as a portion of said sphere (500) covering a tile horizontal angular amplitude ($\varphi_{tile}$) and a tile vertical angular amplitude ($\theta_{tile}$);
   - obtaining (403) an angular position ($\varphi_{ij}$) for each centroid ($C_{ij}$) of the tiles (600) arranged on the parallel lines ($L_j$);
   - determining (404) transformations to be applied to a reference tile to obtain the tiles (600) of the set of tiles, each of said transformations depending on the obtained altitude ($\theta_j$) and angular position ($\varphi_{ij}$) of the centroid ($C_{ij}$) of a corresponding tile to be obtained.

2. The method according to claim 1, wherein each transformation associated with a corresponding tile of the set of tiles is defined by a rotation matrix.

3. The method according to claim 2, wherein said rotation matrix is a matrix product of two rotation matrices defined by the following equation:

$$\text{Rot}_{ij} = \text{Rot}(y, \varphi_{ij}) * \text{Rot}(x, \theta_j)$$

wherein:

   - $\text{Rot}_{ij}$ is the matrix product,
   - $\text{Rot}(x, \theta_j)$ is a rotation matrix associated with a rotation of an angle ($\theta_j$) around an axis x of an orthogonal system of axes x,y,z (R(O,x,y,z)) arranged at a center (O) of the sphere (500),
   - $\text{Rot}(y, \varphi_{ij})$ is a rotation matrix associated with a rotation of an angle ($\varphi_{ij}$) around the axis y of the orthogonal system.

4. The method according to claim 3, wherein, for said corresponding tile:

   - the rotation angle ($\theta_j$) around the axis x corresponds to the obtained altitude of a parallel line ($L_j$) comprising the centroid ($C_{ij}$) of the corresponding tile,
   - the rotation angle ($\varphi_{ij}$) around the axis y corresponds to the obtained angular position of the centroid ($C_{ij}$) of said corresponding tile.

5. The method according to claims 1 to 4, wherein the tile horizontal angular amplitude ($\varphi_{tile}$) and the tile vertical angular amplitude ($\theta_{tile}$) depend on service parameters.

6. The method according to claims 1 to 5, wherein the number of parallel lines depends on the tile vertical angular amplitude ($\theta_{tile}$) and a vertical overlapping ratio ($R_{vert}$).

7. The method according to claims 1 to 6, wherein the number of tiles on a parallel line ($L_j$) depends on the tile horizontal angular amplitude ($\varphi_{tile}$) and a horizontal overlapping ratio ($R_{hor}$).

8. The method according to claims 1 to 7, wherein the angular amplitude between two parallel lines ($L_j$) is constant.

9. The method according to claims 1 to 9, wherein the tiles of said set of tiles have the same shape.

10. A network equipment configured for tiling with a set of tiles (600) a sphere (500) representing a spherical multimedia content,
said network equipment comprising at least one memory (305) and at least one processing circuitry (304) configured to perform:

   - obtaining (402) an altitude ($\theta_j$) for each parallel line ($L_j$) of the sphere (500) comprising one or several centroids of the tiles, each tile being defined as a portion of said sphere covering a tile horizontal angular amplitude ($\varphi_{tile}$) and a tile vertical angular amplitude ($\theta_{tile}$);
   - obtaining (403) an angular position ($\varphi_{ij}$) for each centroid ($C_{ij}$) of the tiles arranged on the parallel lines ($L_j$);
   - determining (404) transformations to be applied to a reference tile to obtain the tiles (600) of the set of tiles, each of said transformations depending on the obtained altitude ($\theta_j$) and angular position ($\varphi_{ij}$) of the centroid ($C_{ij}$) of a corresponding tile to be obtained.

11. The network equipment according to claim 10, wherein each transformation associated with a corresponding tile of the set of tiles is defined by a rotation matrix.

12. The network equipment according to claim 11, wherein said rotation matrix is a matrix product of two rotation matrices defined by the following equation:

$$Rot_{ij} = Rot(y, \varphi_{ij}) * Rot(x, \theta_j)$$

wherein:

   - $Rot_{ij}$ is the matrix product,
   - $Rot(x, \theta_j)$ is a rotation matrix associated with a rotation of an angle ($\theta_j$) around an axis x of an orthogonal system of axes x,y,z (R(O,x,y,z)) arranged at a center (O) of the sphere (500),
   - $Rot(y, \varphi_{ij})$ is a rotation matrix associated with a rotation of an angle ($\varphi_{ij}$) around the axis y of the orthogonal system.

13. The network equipment according to claim 12, wherein, for said corresponding tile (600),

   - the rotation angle ($\theta_j$) around the axis x corresponds to the obtained altitude of a parallel line ($L_j$) comprising the centroid ($C_{ij}$) of the corresponding tile,
   - the rotation angle ($\varphi_{ij}$) around the axis y corresponds to the obtained angular position of the centroid ($C_{ij}$) of said corresponding tile.

14. A method to be implemented at a terminal (100) configured to be in communication with a network equipment (300) to receive a spherical multimedia content represented by a sphere,
wherein the method comprises receiving:

   - altitudes ($\theta_j$) for each parallel line ($L_j$) of the sphere (500) comprising one or several centroids ($C_{ij}$) of tiles tiling said sphere, each tile being defined as a portion of said sphere covering a tile horizontal angular amplitude ($\varphi_{tile}$) and a tile vertical angular amplitude ($\theta_{tile}$);
   - angular positions ($\varphi_{ij}$) for each centroid ($C_{ij}$) of the tiles arranged on the parallel lines ($L_j$);

- transformations to be applied to a reference tile to obtain the tiles (600) tiling said sphere, each of said transformations depending on the obtained altitude ($\theta_j$) and angular position ($\varphi_{ij}$) of the centroid ($C_{ij}$) of a corresponding tile to be obtained.

15. A terminal configured to be in communication with a network equipment (300) to receive a spherical multimedia content represented by a sphere,
wherein said terminal comprises at least one memory (106) and at least one processing circuitry (105) configured to receive:

- altitudes ($\theta_j$) for each parallel line ($L_j$) of the sphere (500) comprising one or several centroids ($C_{ij}$) of tiles tiling said sphere, each tile being defined as a portion of said sphere covering a tile horizontal angular amplitude ($\varphi_{tile}$) and a tile vertical angular amplitude ($\theta_{tile}$);
- angular positions ($\varphi_{ij}$) for each centroid ($C_{ij}$) of the tiles arranged on the parallel lines ($L_j$);

- transformations to be applied to a reference tile to obtain the tiles tiling said sphere, each of said transformations depending on the obtained altitude ($\theta_j$) and angular position ($\varphi_{ij}$) of the centroid ($C_{ij}$) of a corresponding tile to be obtained.

FIG.1

FIG.2

300

**Network equipment**

| | |
|---|---|
| 301 → Interface of connection | Communicating circuitry ← 302 |
| 303 → Streaming controller | Storing means ← 305 |
| 304 → Processor | Content generator ← 306 |

307

**FIG.3**

400

| | |
|---|---|
| Define tiles on a sphere | 401 |
| Obtain an altitude $\theta_j$ for each parallel line $L_j$ of the sphere | 402 |
| Determine an horizontal angular position $\Phi_{ij}$ of the centroids $C_{ij}$ of the tiles | 403 |
| Determine rotation matrices to be applied to a reference tile to obtain the tiles of the set of tiles | 404 |
| Apply the rotation matrices to a reference tile | 405 |
| Determine the pixel content of each tile | 406 |

**FIG.4**

**FIG.5**

**FIG.6**

**FIG.7**

**FIG.8**

**FIG.9**

**FIG.10**

Europäisches
Patentamt

European
Patent Office

Office européen
des brevets

## EUROPEAN SEARCH REPORT

Application Number

EP 17 30 6264

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARY-LUC CHAMPEL: "SRD extensions for VR", 115. MPEG MEETING; 30-5-2016 - 3-6-2016; GENEVA; (MOTION PICTURE EXPERT GROUP OR ISO/IEC JTC1/SC29/WG11), no. m38689, 29 May 2016 (2016-05-29), XP055327844, | 1,10,14,15 | INV.<br>G06T15/20<br>H04N21/43<br>H04N21/218<br>H04N21/2343<br>H04N21/262<br>H04N21/4728<br>H04N21/845 |
| Y | * the whole document * | 2-9,<br>11-13 | |
| Y | GUAN H ET AL: "COMPOSING VIRTUAL ENVIRONMENT USING IMAGES OF DIGITAL CAMERA", VISUAL COMMUNICATIONS AND IMAGE PROCESSING; 20-1-2004 - 20-1-2004; SAN JOSE,, vol. 3639, 25 January 1999 (1999-01-25), pages 443-452, XP008022042, DOI: 10.1117/12.349410 ISBN: 978-1-62841-730-2 * the whole document * | 2-9,<br>11-13 | |
| A | S. HEYMANN ET AL: "Representation, Coding and Interactive Rendering of High-Resolution Panoramic Images and Video using MPEG-4", PROC. PANORAMIC PHOTOGRAMMETRY WORKSHOP (PPW), 28 February 2005 (2005-02-28), XP055034771, Berlin, Germany * the whole document * | 1-15 | |

TECHNICAL FIELDS SEARCHED (IPC)

G06T
H04N

-/--

The present search report has been drawn up for all claims

| Place of search | Date of completion of the search | Examiner |
|---|---|---|
| Munich | 29 November 2017 | Katruff, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 17 30 6264

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LUCIA D 'ACUNTO ET AL: "MPD signalling of 360 content properties for VR applications",<br>115. MPEG MEETING; 30-5-2016 - 3-6-2016; GENEVA; (MOTION PICTURE EXPERT GROUP OR ISO/IEC JTC1/SC29/WG11),<br>no. m38605, 25 May 2016 (2016-05-25), XP055327831,<br>* 3.1 Enabling a viewport based selection strategy of the content - 3.3.2 Cylindrical Representation Space; figures 1, 4-8, 13, 14 * | 1-15 | |

-----

TECHNICAL FIELDS
SEARCHED      (IPC)

The present search report has been drawn up for all claims

| Place of search | Date of completion of the search | Examiner |
|---|---|---|
| Munich | 29 November 2017 | Katruff, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)